# FASCICULE DE BREVET EUROPEEN

(11) **EP 1 197 081 B1**
(45) Date de publication et mention de la délivrance du brevet: **03.09.2003**
(21) Numéro de dépôt: 00938993.3
(22) Date de dépôt: 06.07.2000
(51) Int. Cl.: H04N 7/16

(54) **Système d'autorisation d'un achat impulsif pour télévision à péage**
Zugangsberechtigungssystem für spontanen Kauf beim Bezahlfernsehen
Authorisation system for impulse purchase for pay TV

(30) Priorité: 09.07.1999 CH 126999
(43) Date de publication de la demande: 17.04.2002
(73) Titulaire: Nagravision SA, 1033 Cheseaux-sur-Lausanne (CH)
(72) Inventeur: KUDELSKI, André, CH-1095 Lutry (CH); SASSELLI, Marco, CH-1803 Chardonne (CH); STRANSKY, Philippe, CH-1261 Marchissy (CH); LAFFELY, Laurent, CH-1052 Le Mont-sur-Lausanne (CH)
(74) Mandataire: Wenger, Joel-Théophile
(86) Numéro de dépôt international: IB0000913
(87) Numéro de publication internationale: WO01005151

(56) Documents cités:
- EP-A- 0 895 415
- WO-A-98/43426
- GB-A- 2 193 867
- "FUNCTIONAL MODEL OF A CONDITIONAL ACCESS SYSTEM" EBU REVIEW- TECHNICAL,BE,EUROPEAN BROADCASTING UNION. BRUSSELS, no. 266, 21 December 1995 (1995-12-21), pages 64-77, XP000559450 ISSN: 0251-0936

## Description

La présente invention concerne un système selon le préambule de la revendication 1.

Dans les systèmes connus de choix d'un programme particulier par un spectateur ou un auditeur d'émissions audiovisuelles, le choix d'un programme payant par un usager, ci-après appelé abonné, s'effectue de deux façons:
1) l'abonné téléphone au Central de Gestion des Abonnés pour acheter un produit tel qu'un film ou une manifestation sportive filmée. Cette façon de procéder est de moins en moins employée;
2) l'abonné reçoit, avec le flux de données transmises par exemple par satellite, une grille de programmes présentant l'offre de façon synoptique, en vue d'un choix aisé dans cette grille affichée sur des moyens visuels tels qu'un écran cathodique ou un écran à cristaux liquides. Un tel procédé est décrit par exemple dans le brevet américain 5,038,211.

L'état actuel de la technique consiste à envoyer un flux de données comprenant :
- des informations vidéo, en particulier des informations vidéo codées ou brouillées;
- des informations nécessaires à l'affichage de la grille de programmes précitée;
- des messages de contrôle de qualification, décrivant les droits nécessaires à l'accès par l'abonné à un produit,
- des messages d'administration de qualification, ou EMM, destinés à gérer le profil de l'utilisateur, un type particulier de message d'administration de qualification, qui est spécifiquement destiné à l'achat impulsif, et est couramment appelé IEMM dans la profession.

Le problème qui se pose concerne le temps total nécessaire à l'abonné pour voir son achat enregistré. En effet, ce temps est composé:
a) du temps nécessaire pour appuyer sur les touches, par exemple d'une télécommande, relatives au choix du produit désiré, jusqu'à la touche de validation finale telle que "OK",
b) du temps nécessaire pour que l'abonné reçoive le prochain IEMM.

Ce temps nécessaire pour recevoir l'IEMM est tributaire du volume de trafic du flux de données et du nombre d'abonnés. Comme cet IEMM est un type particulier d'EMM, il est véhiculé dans un cycle de diffusion d'EMM. il peut donc se passer un certain temps, paraissant long à l'abonné, avant que le cycle en question ne soit écoulé et que l'achat impulsif soit validé par le système. Ce temps peut être de plusieurs minutes lorsque l'offre de produit est importante. Durant ce temps, l'acheteur ne pourra pas bénéficier de sa commande et risque de changer d'avis avant que le produit ne soit accessible.

La présente invention se propose de résoudre ce problème par les moyens décrits dans la partie caractérisante de la revendication 1.

Une grille de programmes comprend en général, par émission susceptible de faire l'objet d'un achat impulsif, au moins un nom d'émission, souvent une description de l'émission, un prix d'achat par l'usager, et parfois des informations dite de "rating", notamment dans le cas où le téléspectateur doit avoir un âge minimum requis par la législation pour visionner ou entendre l'émission. Ces données sont attachées à la présentation de la grille de programmes destinée à l'usager.

Le fait d'inclure le message d'administration de qualification spécifique de l'achat impulsif de l'émission considérée avec les données attachées à ladite présentation de la grille, permet de s'affranchir du temps de cycle nécessaire dans l'art antérieur.

L'usager ayant fait son choix et appuyé sur la touche de validation de l'achat impulsif, n'a pas à attendre que le système ait terminé le cycle en cours de diffusion des messages d'administration de qualification. Il en résulte un confort amélioré.

Dans une forme particulière de réalisation de l'invention, le message d'administration de qualification est utilisé localement dans un sous-ensemble matériel installé chez l'usager, ce sous-ensemble matériel comprenant un microprocesseur dans lequel est stocké un profil d'autorisations et de souscriptions d'abonnement relatif à l'usager.

Ce sous-ensemble matériel se présente par exemple sous la forme d'un lecteur de carte à puce, la carte à puce contenant un microprocesseur ou puce, lisible et déchiffrable par le lecteur par des moyens connus en soi.

Dans une forme particulière de réalisation de l'invention, le message d'administration de qualification spécifique de l'achat impulsif a la possibilité de revêtir deux significations: d'une part celle d'autoriser la vision, et d'autre part celle d'inhiber cette autorisation. Cette possibilité procure une souplesse additionnelle dans la gestion des abonnements souscrits par les usagers.

L'invention sera mieux comprise grâce à la description détaillée qui va suivre et qui se réfère aux dessins annexés, dans lesquels:
- la figure 1 représente le flux des données selon l'état de la technique et destinées à la composition de la grille de programme,
- la figure 2 représente le flux de données selon l'état de la technique contenant le message de qualification,
- la figure 3 représente le flux de données selon l'invention combinant les information destinés à la grille de programme et le message de qualification.

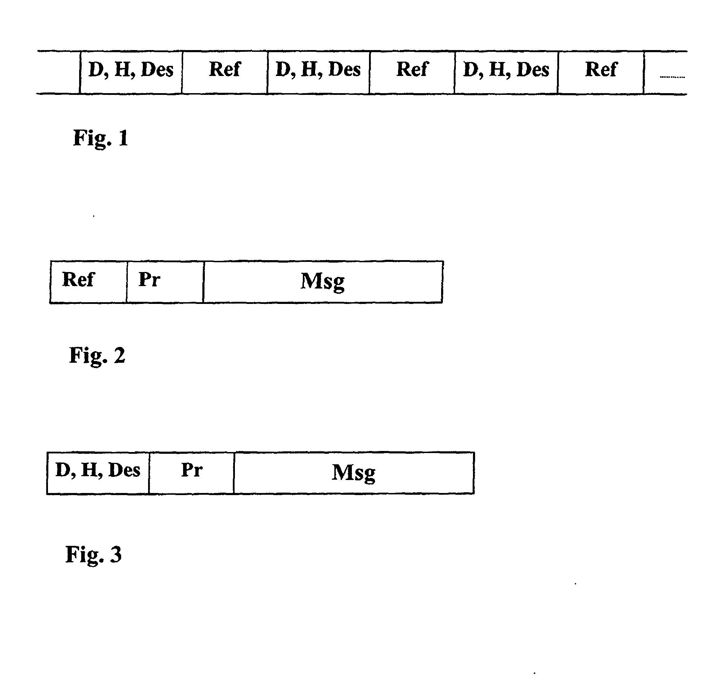

Sur la figure 1 est représenté le flux SI connu dans l'état de la technique et comprenant des paquets, chaque paquet étant spécifique d'une émission. Ce paquet, un fois interprété, défini une ligne dans la grille de programme.

Un paquet comprend donc des informations de date D et heure H ainsi qu'un descriptif Des de l'émission proposée. A ce paquet est associé une référence Ref qui permettra au système de faire le lien entre la ligne sélectionnée par l'utilisateur et le message de qualification EMM contenant les autorisations nécessaires.

Ce message EMM est représenté sur la figure 2 et comprend l'identificateur Ref pour relier le message du flux SI au message EMM. Il contient une information d'abonnement Msg qui permet au module de sécurité (en général une carte à puce) de mémoriser les données nécessaires au décodage de l'émission considérée.

Selon l'invention, la figure 3 représente le nouveau message SI qui permet de former la grille de programme et qui comprend les informations textuelles telles que date D, heure H et description de l'émission Des , ainsi que le message de qualification Msg.

Sur commande de l'utilisateur, les données de qualification Msg sont immédiatement transférées dans le module de sécurité, permettant de profiter, si les conditions de crédit et d'autorisations sont remplies, de l'émission achetée.

Il est à noter que le message d'abonnement Msg peut, selon une variante de l'invention, se décomposer en une partie condition d'achat, par exemple le prix d'achat et une autre partie condition d'annulation d'achat. Si par exemple l'utilisateur qui a acheté une émission qui débute dans cinq minutes décide de ne pas la regarder, c'est la condition d'annulation qui sera appliquée et qui pourra ne rembourser qu'une partie du montant selon la politique décidée par le diffuseur.

Dans la description détaillée qui va suivre on prendra l'exemple d'une pluralité d'encodeurs recevant chacun un flux audio ou vidéo analogique et restituant chacun un flux numérisé compressé. Ces flux numérisés compressés entrent à leur tour dans un multiplexeur, couramment abrégé MUX, qui traite également un flux dit EMM de messages d'administration de qualification, ce flux EMM étant commun à tous les flux numérisés compressés, plusieurs flux de messages de contrôle de qualification, un flux dit d'Informations de Service ou SI, et enfin un flux d'informations spécifiques aux programmes dit PSI.

Le flux PSI donne simplement aux décodeurs, situés à l'autre extrémité du canal de diffusion tel qu'un satellite, les numéros d'identificateurs de paquets, dits PID, ces paquets étant générés par le multiplexeur.

Ainsi, à titre d'exemple, un premier paquet sera muni d'une entête PID ou "header" portant son numéro, et portera un élément de flux vidéo d'une émission de la Télévision Suisse Romande 1. Le suivant, portant une autre en-tête PID, portera par exemple un élément de flux audio de la Télévision Suisse Romande 2. Le troisième pourra porter derrière son PID un élément de flux audio de la Télévision Suisse Romande 1, et ainsi de suite.

Le flux PSI ne contient pas à proprement parler d'informations dites intelligibles, telles que le nom de la chaîne. Il se contente de donner les numéros de PID à l'intention du décodeur d'arrivée, pour lui fournir un fil d'Ariane et lui permettre de reconstituer la suite des paquets en les mettant bout à bout sans erreur.

C'est le flux d'Informations de Service SI qui a pour rôle de transporter les données nécessaires pour renseigner la grille de programmes. Ces données sont, de façon générale, dites intelligibles. Elles explicitent en effet le nom des chaînes (tels que TSR1 et TSR2 dans les exemples précédents), donnent une liste des fréquences pour tous les transports, ou encore une liste de toutes les émissions, cette énumération étant non limitative.

La grille de programmes est organisée de manière temporelle. Les informations contenues dans le flux d'Informations de Service sont en effet disposées en segments horaires. Un premier segment pourra par exemple occuper la plage horaire de minuit à 4 heures du matin, et le segment suivant une autre plage horaire démarrant à 4 heures du matin. La grille de programmes expose ces informations dans des formats appelés descripteurs. Ces descripteurs sont standardisés et relatent le nom du programme, son type (sport, informations, émission pour enfants, ... ), l'heure de début, la durée, cette liste étant non limitative.

La présente demande s'étend également à un descripteur spécifiquement destiné à recevoir le message d'administration de qualification spécifique de l'achat impulsif de l'émission considérée. La validation par l'usager du choix de cette émission permet donc, suite à une simple lecture du champ correspondant à ce descripteur, l'enregistrement de cet achat dans le système de gestion des abonnés, sans avoir à attendre la fin d'un cycle de messages d'administration de qualification.

Le décodeur transmet a ce moment les informations contenues dans le message de qualification à la carte à puce qui procédera au contrôle des critères d'autorisation nécessaires (du crédit par exemple) et mémorisera l'autorisation correspondante. Cette autorisation est traitée comme un abonnement c'est-à-dire quelle autorise un décodage ultérieur de l'émission sélectionnée.

On voit dans cet exemple que le message d'administration de qualification spécifique de l'achat impulsif IEMM est codé avec des Informations de Service et est stocké dans la grille de programmes, au lieu de suivre le cycle correspondant aux messages normaux d'administration de qualification.

Dans une des formes d'exécution de l'invention, le prix de l'émission est transmis avec le message IEMM. Ainsi, non seulement l'autorisation est gérée par ce message mais également sa valeur, valeur qui sera débitée en cas d'achat sur la carte de l'abonné. Ceci permet de pratiquer une politique des prix différenciée en fonction du type d'émission.

## Revendications

1. Système de sélection et de validation d'un achat impulsif pour télévision à péage comprenant la présentation à un usager, au moyen d'un dispositif d'affichage, d'une grille de programmes, et la sélection par cet usager d'un programme de son choix particulier dans la grille par des moyens connus en soi, ce choix devant être validé dans le système par un message d'administration de qualification (EMM), ce message étant spécifique d'un achat impulsif, **caractérisé en ce que** le message d'administration de qualification (EMM) spécifique d'un achat impulsif est contenu dans les données (SI) attachées à la présentation de la grille de programmes.

2. Système selon revendication 1, **caractérisé en ce que** le message d'administration de qualification est utilisé localement dans un sous-ensemble matériel installé chez l'usager, ce sous-ensemble matériel comprenant un module de sécurité dans lequel est stocké un profil d'autorisations et de souscriptions d'abonnement relatif à l'usager.

3. Système selon revendication 1, **caractérisé en ce que** le message d'administration de qualification spécifique d'un achat impulsif peut revêtir soit la signification d'autoriser la vision, soit celle d'inhiber cette autorisation de vision.

4. Système selon revendication 1, **caractérisé en ce que** le message d'administration de qualification (EMM) comprend des conditions définissant l'autorisation de la vision et des conditions d'annulation de cette autorisation.

## Patentansprüche

1. System der Auswahl und Bestätigung eines Spontankaufs für ein Abonnentenfernsehen, darin bestehend, dass einem Benutzer durch eine Anzeigevorrichtung ein Programmraster vorgelegt wird und dieser Benutzer durch an sich bekannte Mittel im Raster ein Programm seiner speziellen Wahl auswählt, wobei diese Wahl im System durch eine Berechtigungsverwaltungsnachricht (EMM) bestätigt werden muss und diese Nachricht für einen Spontankauf spezifisch ist, **dadurch gekennzeichnet, dass** die Berechtigungsverwaltungsnachricht (EMM), die für einen Spontankauf spezifisch ist, in den an die Darbietung des Programmrasters angefügten Daten (DI) enthalten ist.

2. System nach Anspruch 1, **dadurch gekennzeichnet, dass** die Berechtigungsverwaltungsnachricht lokal in einer Hardware-Untereinheit verwendet wird, die beim Benutzer installiert ist, wobei diese Hardware-Untereinheit einen Sicherheitsmodul umfasst, in dem ein Profil der Autorisierungen und der Abonnementszeichnungen des Benutzers gespeichert ist.

3. System nach Anspruch 1, **dadurch gekennzeichnet, dass** die Berechtigungsverwaltungsnachricht, die für einen Spontankauf spezifisch ist, sowohl die Bedeutung, das Zuschauen zu autorisieren, als auch die Bedeutung, diese Autorisierung des Zuschauens zu verhindern, annehmen kann.

4. System nach Anspruch 1, **dadurch gekennzeichnet, dass** die Berechtigungsverwaltungsnachricht (EMM) Bedingungen, die die Autorisierung des Zuschauens definieren, sowie Bedingungen für eine Annullierung dieser Autorisierung umfasst.

## Claims

1. System for selecting and confirming an impulse purchase for pay television comprising the presentation to a user, by means of a display device, of a grid of programmes, and the selection by this user of a programme of his particular choice from the grid by means known per se, this choice having to be confirmed in the system by an entitlement management message (EMM), this message being specific to an impulse purchase, **characterized in that** the entitlement management message (EMM) specific to an impulse purchase is contained in the data (SI) tied to the presentation of the programme grid.

2. System according to Claim 1, **characterized in that** the entitlement management message is used locally in a hardware subassembly installed at the user's premises, this hardware subassembly comprising a security module in which is stored a subscriber authorizations and subscriptions profile relating to the user.

3. System according to Claim 1, **characterized in that** the entitlement management message specific to an impulse purchase may entail either the notification to authorize viewing, or that to veto this viewing authorization.

4. System according to Claim 1, **characterized in that** the entitlement management message (EMM) comprises conditions defining the authorization of viewing and conditions of cancellation of this authorization.
